Europäisches Patentamt

European Patent Office

Office européen des brevets

(19)

(11) **EP 0 692 543 B1**

(12) **FASCICULE DE BREVET EUROPEEN**

(45) Date de publication et mention
de la délivrance du brevet:
**01.08.2001 Bulletin 2001/31**

(51) Int Cl.⁷: **C21B 13/00**

(21) Numéro de dépôt: **95870070.0**

(22) Date de dépôt: **15.06.1995**

(54) **Procédé pour fabriquer une éponge de fer à basse teneur en soufre**

Verfahren zum Erzeugen von Eisenschwamm mit niedrigem Schwefelgehalt

Process for producing sponge iron with low sulfur content

(84) Etats contractants désignés:
**AT BE DE ES FR GB IT LU NL SE**

(30) Priorité: **13.07.1994 BE 9400652**

(43) Date de publication de la demande:
**17.01.1996 Bulletin 1996/03**

(73) Titulaire: **CENTRE DE RECHERCHES
METALLURGIQUES a.s.b.l., CENTRUM VOOR
RESEARCH IN DE METALLURGIE v.z.w.
B-1040 Bruxelles (BE)**

(72) Inventeurs:
• **Munnix, René
B-4651 Battice (BE)**
• **Steyls, Didier
B-1170 Bruxelles (BE)**
• **Economopoulos, Marios
B-4020 Liege (BE)**
• **Borlee, Jean
B-4000 Liege (BE)**

(56) Documents cités:
**DE-C- 91 602          DE-C- 249 031
US-A- 2 277 067        US-A- 2 285 487
US-A- 4 701 214**

• **PATENT ABSTRACTS OF JAPAN vol. 4 no. 12
(C-071) ,29 Janvier 1980 & JP-A-54 147101
(NIPPON KOKAN) 17 Novembre 1979,**
• **IRON AND STEEL, vol. 44, no. 4, Août 1971 page
280 'continuous process for the production of
sponge iron'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé pour fabriquer une éponge de fer à basse teneur en soufre.

Au sens de la présente invention, une éponge de fer est une matière ferreuse obtenue par une opération de réduction, dite directe, à partir d'oxyde de fer. Traditionnellement, l'oxyde de fer provient des minerais, où il est accompagné par diverses substances indésirables formant la gangue. Actuellement, une source intéressante d'oxyde de fer est également constituée par les oxydes superficiels recueillis à différents stades des processus de fabrication sidérurgiques, tels que les pailles de laminoirs et les boues de décapage. Cette catégorie d'oxydes ne comporte pas de gangue, mais elle est fréquemment chargée d'impuretés telles que des résidus d'huiles ou de graisses.

La description qui suit fera référence au terme général d'oxyde de fer; ce terme englobe ici aussi bien les minerais de fer habituels que les oxydes provenant des processus sidérurgiques, soit séparément soit sous forme de mélanges en proportions quelconques.

L'éponge de fer suscite actuellement un intérêt croissant, en particulier en vue de son utilisation dans les convertisseurs et surtout dans les fours électriques d'aciérie. Jusqu'à présent, la charge métallique de ces engins est principalement constituée de ferrailles, qui complètent la charge de fonte liquide habituelle. On constate cependant que la qualité de ces ferrailles a tendance à se dégrader, notamment en raison de leur teneur en éléments d'alliages qui peuvent être indésirables pour les aciers envisagés. Par ailleurs, le prix des ferrailles varie dans des proportions parfois considérables, en fonction non seulement de leur qualité mais aussi de leur disponibilité, ce qui peut compromettre l'approvisionnement des aciéries électriques en particulier.

On connaît dans la technique de nombreux procédés de fabrication d'éponge de fer. Ces procédés sont basés sur l'utilisation d'un agent réducteur qui est en général soit gazeux soit solide. Le procédé de l'invention appartient à la catégorie des procédés basés sur l'utilisation d'un agent réducteur solide, qui est essentiellement un agent carboné et tout parti-culièrement du charbon finement divisé.

Les procédés connus dans ce domaine sont mis en oeuvre dans des fours de types divers, tels que des fours à cuve, des fours à lit fluidisé ou des fours tournants, qui peuvent nécessiter des investissements importants et entraîner des frais de fonctionnement élevés. De plus, les procédés actuellement connus souffrent d'au moins un inconvénient sérieux; certains de ces procédés requièrent une consommation de charbon très élevée, de l'ordre de 700 kg de charbon par tonne d'éponge de fer produite, tandis que d'autres procédés conduisent à des teneurs en soufre très élevées dans l'éponge de fer, inacceptables pour les aciéries électriques.

Par le brevet US-A-4.701.214 notamment, on connaît déjà un procédé de fabrication d'éponge de fer, dans lequel des pellets composés d'oxydes de fer finement divisés et d'un combustible carboné granulaire sont chauffés dans un four annulaire à sole tournante où ils sont réduits par une partie du CO dégagé par le charbon et cuits ensuite par la chaleur résultant de la combustion du CO excédentaire. L'éponge de fer produite par ce procédé présente cependant une teneur en soufre élevée qui ne permet pas l'utili-sation économique de cette éponge de fer dans un four électrique.

Le brevet US-A-2.285.487 décrit un procédé de réduction d'oxydes de fer à des températures inférieures au point de fusion du fer dans lequel une couche d'oxydes de métal (fer) est disposée entre une couche inférieure et une couche supérieure d'agent réducteur carboné, ladite couche d'oxydes étant ainsi complètement entourée par l'agent réducteur carboné et des bandes de séparation, par exemple en papier, sont interposées entre les couches adjacentes. En outre, ledit brevet US-A-2 285 487 indique que la charge à traiter est déposée sur une courroie transporteuse qui est introduite dans un tube rectiligne ou caisson fermé au travers duquel elle suit un chemin rectiligne, ladite courroie étant chargée à l'entrée du caisson et déchargée à sa sortie. Le caisson précité est chauffé indirectement via un four dans lequel il est positionné et la température dudit four est régulée de manière à échauffer la charge sise dans le caisson et provoquer de la sorte la réduction des oxydes de fer.

La présente invention a pour objet un procédé de fabrication d'une éponge de fer, qui est basé sur l'utilisation économiquement acceptable d'un agent réducteur carboné solide et qui permet en même temps de limiter la teneur en soufre à un niveau compatible avec la marche du four à arc électrique d'aciérie. En outre, ce procédé ne requiert pas les importants investissements précités et ii ne nécessite pas l'emploi de liants.

Conformément à la présente invention, un procédé pour fabriquer une éponge de fer à basse teneur en soufre, dans lequel on dépose sur une sole tournante (5) d'un four et on chauffe au moyen de générateurs de chaleur une charge (7) composée d'au moins deux couches superposées contenant des oxydes de fer, un agent réducteur carboné solide et un agent désulfurant et on effectue la réduction desdits oxydes de fer au moins au moyen de monoxyde de carbone (CO), est caractérisé en ce que la charge (7) est composée de matière finement divisée, en ce qu'au moins une desdites couches est constituée essentiellement d'oxydes de fer (1), en ce qu'au moins une autre desdites couches est formée par un mélange (M) desdits agent réducteur carboné solide (2) et agent désuifurant (3), en ce que !a couche supérieure déposée en dernier lieu est formée par un mélange (M) desdits agent réducteur carboné solide (2) et agent désulfurant (3), en ce qu'on dépose éventuellement une mince couche de charbon fin entre lesdites couches superposées, en ce qu'on soumet la couche supérieure au chauffage direct issu des générateurs de chaleur de façon à provoquer la gazéification au moins partielle dudit agent réducteur carboné solide en composés gazeux du carbone et du soufre, en ce qu'au moins une partie du monoxyde de carbone (CO) utilisé pour la réduction desdits oxydes de fer est contenu dans lesdits composés gazeux du carbone diffusant essentiellement entre la couche supérieure et la ou les couches formées d'oxyde de fer, en ce qu'on fixe, au moyen dudit agent désulfurant, au moins une partie du soufre desdits composés gazeux du soufre, et en ce qu'on sépare lesdits oxydes de fer réduits et la matière contenant les résidus dudit agent réducteur carboné solide et dudit agent désulfurant.

On constate que, malgré l'absence de liant, la réduction des oxydes de fer finement divisés donne lieu à une agglomération de ces oxydes de fer en un gâteau consistant d'éponge de fer, qu'il est aisé de séparer de la couche granulaire constituée par les résidus de l'agent réducteur carboné solide et de l'agent désulfurant.

De façon connue en soi, la gazéification de l'agent réducteur carboné solide requiert un chauffage à haute température, de l'ordre d'au moins 900°C. Ce chauffage est conduit de telle façon que les composés gazeux du carbone contiennent essentiellement du monoxyde de carbone (CO), qui est un gaz très réducteur. Le chauffage nécessaire à cette gazéification est avantageusement assuré par des brûleurs, de préférence installés dans la voûte du four contenant la sole mobile, qui produisent notamment le $CO_2$ nécessaire au démarrage de la réaction de Boudouard :

$$C + CO_2 \rightarrow 2\ CO.$$

Dans la proposition qui fait l'objet de la présente invention, le CO résultant de ladite gazéification pénètre par diffusion dans la couche d'oxydes de fer où il assure la réduction desdits oxydes de fer par les réactions :

$$3\ Fe_2O_3 + CO \rightarrow 2\ Fe_3O_4 + CO_2$$

$$Fe_3O_4 + CO \rightarrow 3\ FeO + CO_2$$

$$FeO + CO \rightarrow Fe + CO_2$$

Le $CO_2$ ainsi produit dans la couche d'oxydes de fer diffuse à son tour vers la couche contenant l'agent réducteur carboné solide, où chaque mole de $CO_2$ donne à nouveau naissance à deux moles de CO par la réaction de Boudouard rappelée plus haut. Une de ces deux moles de CO revient par diffusion dans la couche d'oxydes de fer pour y réduire un oxyde de fer, tandis que l'autre mole de CO s'échappe de la couche contenant l'agent réducteur carboné solide pour venir brûler au-dessus de la charge, contribuant ainsi au chauffage nécessaire à la gazéification de l'agent réducteur carboné solide.

Pour que les deux fonctions précitées de réduction et de chauffage puissent être assurées de manière satisfaisante, il convient que l'agent réducteur carboné solide soit présent en quantité suffisante dans la couche constituée par ledit mélange; dans le cas du charbon fin, cette quantité est de préférence comprise entre 250 et 500 kg de carbone par tonne d'éponge de fer produite, selon la teneur en fer des oxydes de fer utilisés.

Etant donné que la couche supérieure contient l'agent réducteur carboné solide; elle sera dès lors le siège de la réaction de gazéification, qui est très endothermique. A cet effet, il est avantageux qu'elle puisse être chauffée directement et intensément par les moyens de chauffage de la charge, en particulier par les brûleurs situés dans la voûte du four. Au contraire, les réactions de réduction sont pratiquement athermiques et ne nécessitent dès lors pas d'apport de chaleur important.

Il ne sortirait cependant pas du cadre de la présente invention d'inverser l'ordre des couches superposées, ni même de prévoir plus de deux couches superposées en alternance sur la sole.

De plus, il va de soi que l'agent réducteur carboné solide utilisable dans le cadre du présent procédé n'est pas limité au charbon fin, mais qu'il comprend aussi d'autres substances carbonées telles que le coke, le brai, le poussier de coke, le charbon de bois ou d'autres substances analogues.

Au cours de la gazéification dudit agent réducteur carboné solide, il se forme également des composés gazeux du soufre; ceux-ci réagissent immédiatement avec un agent désulfurant approprié pour former des composés solides qui restent dans ladite couche contenant ledit agent réducteur carboné solide.

En outre, il est envisagé qu'on dépose une mince couche de charbon fin entre lesdites deux couches superposées constituant la charge, afin d'éviter le collage dudit agent désulfurant, ou de composés qui le contiennent, à la couche d'oxydes de fer lors du chauffage destiné à assurer la gazéification de l'agent réducteur carboné solide.

Selon une caractéristique supplémentaire, on fixe au moins une partie du soufre desdits composés gazeux du soufre au moyen d'un agent désulfurant solide. Parmi les agents désulfurants utilisables, certains composés du calcium et notamment la chaux (CaO) et la castine ($CaCO_3$) sont particulièrement indiqués en raison d'une part de leur efficacité à réagir avec les composés gazeux pour former des composés solides et d'autre part de leur caractère économique. En particulier, la chaux peut être utilisée sous la forme d'un lait de chaux imprégnant au moins une partie dudit agent réducteur carboné solide.

D'une manière connue en soi, la séparation desdits oxydes réduits et de la couche contenant les résidus dudit agent réducteur carboné solide et dudit agent désulfurant est ensuite effectuée par criblage, éventuellement après concassage de l'éponge de fer, puis le résidu granulaire peut être soumis à une séparation magnétique pour récupérer les particules de fer qui pourraient avoir été entraînées lors du criblage.

Suivant encore une autre caractéristique intéressante, on compacte au moins une desdites couches constituant la charge, afin d'améliorer le transfert de la chaleur au sein de ladite couche. Ce compactage peut par exemple être effectué par un rouleau disposé au-dessus de la sole mobile.

L'éponge de fer, éventuellement refroidie, qui présente une faible teneur en soufre est déjà utilisable sans difficultés dans les fours à arc électrique d'aciérie.

Néanmoins, la présente invention a aussi pour objet de proposer un procédé d'enrichissement en carbone de cette éponge de fer afin que celle-ci renferme une source d'énergie suffisante pour faire baisser, dans des proportions appréciables, la consommation d'énergie requise pour sa fusion dans un four électrique. Cet apport de carbone est réalisé à l'aide de moyens simples, à partir d'hydrocarbures gazeux, éventuellement récupérés dans divers processus industriels. Il présente l'avantage important de ne pas introduire de soufre dans l'éponge de fer, et de ce fait il influence favorablement la qualité de l'acier produit à partir de cette éponge de fer.

Pour diverses raisons métallurgiques et aussi pour réduire cette consommation d'énergie électrique, il est bien connu d'injecter un combustible solide pulvérulent, tel que du charbon fin ou du poussier de coke, et de l'oxygène dans le bain fondu; ces injections provoquent un dégagement de CO qui brûle au-dessus du laitier flottant sur le bain de métal en fusion. Ce procédé connu présente cependant le sérieux inconvénient d'incorporer à l'acier des quantités non négligeables de soufre provenant du charbon ou du coke injecté, ce qui a pour effet de dégrader, parfois dans des proportions importantes, la qualité de l'acier.

Conformément à la présente invention, un procédé pour fabriquer une éponge de fer à basse teneur en soufre et à teneur élevée en carbone est caractérisé en ce que l'on expose une éponge de fer chaude à un gaz contenant un hydrocarbure gazeux, en ce que l'on réalise le craquage thermique dudit hydrocarbure gazeux au contact de ladite éponge de fer chaude, en ce que l'on dépose au moins une partie des particules de carbone résultant dudit craquage thermique à la surface de l'éponge de fer chaude, et en ce que l'on refroidit ladite éponge de fer jusqu'à une température comprise entre 600°C et 800°C, et de préférence voisine de 700°C.

L'exposition de l'éponge de fer chaude audit hydrocarbure gazeux est de préférence réalisée en continu, notamment dans un four parcouru à contre-courant par le gaz contenant ledit hydrocarbure gazeux.

L'hydrocarbure gazeux contenu dans le gaz précité est un gaz capable de produire des particules de carbone, telles que du graphite ou des suies, par craquage thermique aux températures auxquelles se trouve initialement l'éponge de fer chaude; en général, ces températures sont comprises entre 900°C et 1300°C environ.

On pourrait cependant prévoir un chauffage d'appoint de l'éponge de fer pour favoriser le craquage thermique de cet hydrocarbure gazeux.

Suivant une mise en oeuvre particulière, il a été trouvé intéressant d'utiliser un hydrocarbure gazeux tel que le méthane ($CH_4$), qui est généralement disponible dans les usines sidérurgiques, notamment sous la forme de gaz naturel. Ledit hydrocarbure gazeux peut être présent en toute proportion dans ledit gaz et même être injecté substantiellement à l'état pur.

Le craquage thermique dudit hydrocarbure gazeux est une opération fortement endothermique. En plus du dépôt de particules de carbone, elle provoque dès lors un refroidissement sensible de l'éponge de fer. Ce refroidissement peut être suffisant pour abaisser la température de l'éponge de fer à la valeur visée valeur comprise entre 600°C et 800°C, et de préférence voisine de 700°C. S'il s'avérait toutefois que le refroidissement dû au craquage ne permette pas d'atteindre cette température, il pourrait être prolongé en poursuivant l'injection dudit hydrocarbure gazeux jusqu'à l'obtention de la température désirée.

En règle générale, le refroidissement n'est pas poursuivi jusqu'à la température ambiante, car il peut être avantageux soit de charger l'éponge de fer chaude directement au four électrique soit de l'utiliser pour fabriquer des briquettes dans une presse à chaud.

En raison de la porosité de l'éponge de fer, le gaz de traitement peut pénétrer au sein de la masse métallique et le craquage thermique entraîne le dépôt de particules de carbone réparties dans cette masse. Au sens de la présente demande, le dépôt de carbone à la surface de l'éponge de fer englobe le dépôt sur les surfaces intérieures des pores, au sein de la masse d'éponge de fer.

Le carbone ainsi déposé présente l'avantage d'être propre, c'est-à-dire de ne pas être contaminé par des substances indésirables telles que le soufre, comme cela est fréquemment le cas avec des particules de charbon. Une partie de l'enrichissement en carbone peut consister en la formation d'une certaine quantité de cémentite $Fe_3C$, qui résulte de la réaction directe du fer avec le carbone à la température du craquage thermique.

Enfin, le gaz chaud résiduel, riche en hydrogène, quittant l'étape de craquage thermique, peut être directement recyclé, de préférence dans le processus de fabrication de l'éponge de fer elle-même, notamment dans l'étape de réduction de ce processus où il sert non seulement d'agent réducteur mais aussi de générateur de chaleur par combustion.

Le procédé de l'invention sera expliqué de manière plus détaillée dans la description qui suit, où il est fait référence aux dessins annexés, dans lesquels la

Fig. 1      illustre schématiquement les opérations constituant une variante particulière du procédé de l'invention; et la

Fig. 2      représente une coupe transversale à travers la charge déposée sur une sole tournante.

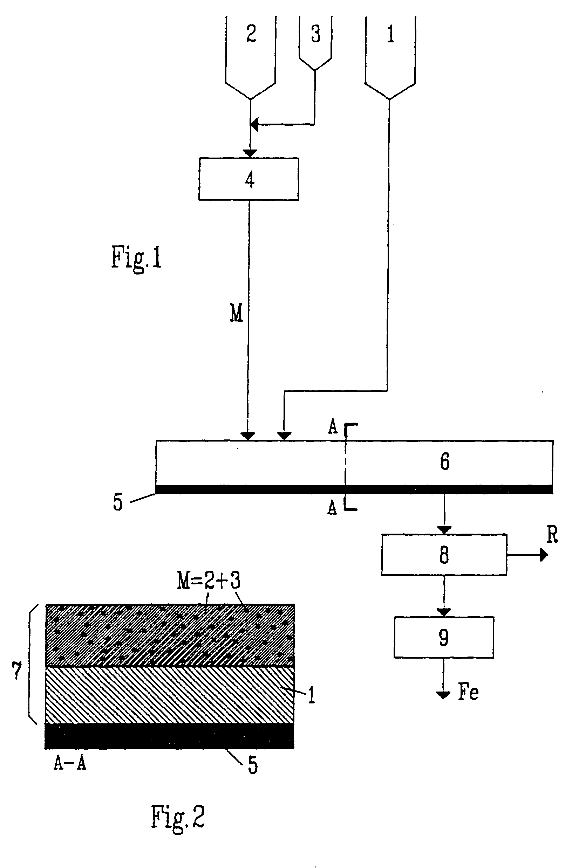

Dans la variante illustrée dans la Fig. 1, des oxydes de fer finement divisés 1 et un mélange M constitué de charbon fin 2 et de castine 3, formé dans un mélangeur 4, sont déposés en couches superposées sur une sole tournante 5 disposée dans un four annulaire 6. La charge 7 ainsi constituée se compose d'une couche inférieure d'oxydes de fer 1 et d'une couche supérieure de mélange M de charbon fin 2 et de castine 3. La structure de la charge 7 est montrée schématiquement dans la coupe transversale A-A représentée dans la Fig. 2, où l'on peut voir les deux couches superposées. Dans ce four 6, la charge 7 est chauffée au moyen de brûleurs, non représentés, jusqu'à une température suffisante pour opérer la gazéification au moins partielle du charbon fin 2. Il se produit alors au sein de la couche supérieure un dégagement de CO qui, par le mécanisme rappelé plus haut, assure d'une part la réduction des oxydes de fer de la couche inférieure et d'autre part le chauffage de la charge 7. Simultanément, le chauffage de la charge 7 donne lieu à un dégagement de composés gazeux du soufre, provenant du charbon. Ces composés gazeux sont immédiatement mis en contact avec l'agent désulfurant, à savoir la castine 3, dispersé au sein de la couche supérieure, et le soufre est aussitôt fixé par l'agent désulfurant sous la forme de composés solides granulaires. La présence de castine permet de fixer d'autant mieux le soufre des composés gazeux du soufre que la castine est plus finement répartie dans la couche supérieure. Lorsque la réduction des oxydes de fer et la désulfuration des composés gazeux du soufre sont terminées, et malgré l'absence de liant, la charge présente sur la sole mobile comprend finalement une couche inférieure agglomérée, constituant l'éponge de fer, et une couche supérieure de matière granulaire composée des résidus de l'agent réducteur carboné solide et de l'agent désulfurant ainsi que des composés solides du soufre résultant de ladite désulfuration. De façon avantageuse, on peut prévoir à ce moment une phase d'enrichissement en carbone de l'éponge de fer, en faisant circuler dans le four, au-dessus de la charge chaude, un courant d'hydrocarbure gazeux tel que le méthane ($CH_4$) dont le craquage thermique produit des particules de carbone propre réparties dans la masse de l'éponge de fer; cette variante présente un grand intérêt pour la suite de l'opération métallurgique à l'aciérie.

Une étape de criblage 8, éventuellement précédée d'un concassage, est prévue à la sortie du four 6 pour séparer l'éponge de fer et les résidus granulaires R comprenant notamment les cendres de l'agent réducteur carboné solide et les composés solides du soufre, tels que le sulfure CaS. L'éponge de fer chaude est ensuite envoyée à un refroidisseur 9, d'où l'on soutire, en continu, une éponge de fer Fe à faible teneur en soufre.

Un avantage important du procédé de l'invention réside dans l'absence d'une étape de pelletisation des oxydes de fer, avec ou sans charbon pulvérisé, ce qui permet de simplifier fortement l'installation et par conséquent de réduire nettement les frais d'investissement. Le procédé est également avantageux du fait qu'il n'emploie pas de liant. Enfin, il assure une fixation immédiate du soufre provenant de l'agent réducteur carboné solide, à savoir le charbon fin, au sein même de la couche qui le contient, afin d'éviter l'introduction de soufre dans l'éponge de fer.

Le procédé de l'invention n'est pas limité à l'exemple de réalisation qui vient d'être décrit et illustré. Il comprend aussi les modifications qu'un homme du métier pourrait y apporter, en particulier en ce qui concerne le choix de l'agent désulfurant et le nombre ou la disposition des couches superposées sur la sole mobile.

## Revendications

1. Procédé pour fabriquer une éponge de fer à basse teneur en soufre, dans lequel on dépose sur une sole tournante (5) d'un four et on chauffe au moyen de générateurs de chaleur une charge (7) composée d'au moins deux couches superposées contenant des oxydes de fer, un agent réducteur carboné solide et un agent désulfurant et on effectue la réduction desdits oxydes de fer au moins au moyen de monoxyde de carbone (CO), caractérisé en ce que la charge (7) est composée de matière finement divisée, en ce qu'au moins une desdites couches est constituée essentiellement d'oxydes de fer (1), en ce qu'au moins une autre desdites couches est formée par un mélange (M) desdits agent réducteur carboné solide (2) et agent désulfurant (3), en ce que la couche supérieure déposée en dernier lieu est formée par un mélange (M) desdits agent réducteur carboné solide (2) et agent désulfurant (3), en ce qu'on dépose éventuellement une mince couche de charbon fin entre lesdites couches superposées, en ce qu'on soumet la couche supérieure au chauffage direct issu des générateurs de chaleur de façon à provoquer la gazéification au moins partielle dudit agent réducteur carboné solide en composés gazeux du carbone et du soufre, en ce qu'au moins une partie du monoxyde de carbone (CO) utilisé pour la réduction desdits oxydes de fer est contenu dans lesdits composés gazeux du carbone diffusant essentiellement entre la couche supérieure et la ou les couches formées d'oxyde de fer, en ce qu'on fixe, au moyen dudit agent désulfurant, au moins une partie du soufre desdits composés gazeux du soufre, et en ce qu'on sépare lesdits oxydes de fer réduits et la matière contenant les résidus dudit agent réducteur carboné solide et dudit agent désulfurant.

2.  Procédé suivant la revendication 1, caractérisé en ce que les générateurs de chaleur comprennent des brûleurs disposés au-dessus de la charge de manière telle que leur rayonnement atteigne directement la couche supérieure de ladite charge.

3.  Procédé suivant les revendications 1 ou 2, caractérisé en ce que l'on compacte au moins une des couches constituant ladite charge.

4.  Procédé suivant l'une ou l'autre des revendications 1 à 3, caractérisé en ce que l'on chauffe la charge à une température d'au moins 900°C pour assurer la gazéification dudit agent réducteur carboné.

5.  Procédé suivant l'une ou l'autre des revendications 1 à 4, caractérisé en ce que ledit agent réducteur carboné solide est incorporé dans ledit mélange (M) en une quantité comprise entre 250 et 500 kg de carbone par tonne d'éponge de fer produite.

6.  Procédé suivant l'une ou l'autre des revendications 1 à 5, caractérisé en ce que ledit agent désulfurant est choisi parmi les composés du calcium, tels que la chaux (CaO) et la castine ($CaCO_3$).

7.  Procédé suivant l'une ou l'autre des revendications 1 à 6, caractérisé en ce que l'on expose l'éponge de fer chaude à un gaz contenant un hydrocarbure gazeux, en ce que l'on réalise le craquage thermique dudit hydrocarbure gazeux au contact de ladite éponge de fer chaude, en ce que l'on dépose au moins une partie des particules de carbone résultant dudit craquage thermique à la surface de l'éponge de fer chaude, et en ce que l'on refroidit ladite éponge de fer jusqu'à une température comprise entre 600°C et 800°C.

8.  Procédé suivant la revendication 7, caractérisé en ce que ledit hydrocarbure gazeux est constitué par du méthane.

**Claims**

1.  Process for manufacturing an sponge iron having a low sulphur content, in which process a charge (7) is deposited on a rotating hearth (5) of a furnace and this charge is heated by means of heat generators, the said charge being composed of at least two superposed layers containing iron oxides, a solid carbon reducing agent and a desulphurizing agent, and the said iron oxides are reduced at least by means of carbon monoxide (CO), characterized in that the charge (7) is composed of a finely divided material, in that at least one of the said layers essentially consists of iron oxides (1), in that at least one other of the said layers is formed by a mixture (M) of the said solid carbon reducing agent (2) and the said desulphurizing agent (3), in that the upper layer deposited lastly is formed by a mixture (M) of the said solid carbon reducing agent (2) and the said desulphurizing agent (3), in that a thin layer of fine carbon is possibly deposited between the said superposed layers, in that the upper layer is subjected to direct heating from the heat generators so as to cause at least partial gasification of the said solid carbon reducing agent into gaseous carbon and sulphur compounds, in that at least some of the carbon monoxide (CO) used for reducing the said iron oxides is contained in the said gaseous carbon compounds diffusing essentially between the upper layer and the iron oxide layer or layers formed, in that at least some of the sulphur of the said gaseous sulphur compounds is fixed by means of the said desulphurizing agent and in that the said reduced iron oxides are separated from the material containing the residues of the said solid carbon reducing agent and of the said desulphurizing agent.

2.  Process according to Claim 1, characterized in that the heat generators comprise burners placed above the charge so that their radiation reaches the upper layer of the said charge directly.

3.  Process according to either of Claims 1 and 2, characterized in that at least one of the layers constituting the said charge is compacted.

4.  Process according to any one of Claims 1 to 3, characterized in that the charge is heated to a temperature of at least 900°C in order to gasify the said carbon reducing agent.

5.  Process according to any one of Claims 1 to 4, characterized in that the said solid carbon reducing agent is incorporated in the said mixture (M) in an amount of between 250 and 500 kg of carbon per ton of sponge iron produced.

6.  Process according to any one of Claims 1 to 5, characterized in that the said desulphurizing agent is chosen from calcium compounds, such as lime (CaO) and limestone ($CaCO_3$).

7.  Process according to any one of Claims 1 to 6, characterized in that the hot sponge iron is exposed to a gas containing a gaseous hydrocarbon, in that the said gaseous hydrocarbon undergoes thermal cracking in contact with the said hot sponge iron, in that at least some of the carbon particles resulting from the said thermal cracking are deposited on the surface of the hot sponge iron and in that the said sponge iron is cooled down to a temperature of between 600°C and 800°C.

8.  Process according to Claim 7, characterized in that the said gaseous hydrocarbon consists of methane.


**Patentansprüche**

1.  Verfahren zur Herstellung von Eisenschwamm mit geringem Schwefelgehalt, bei dem man auf einen Drehteller (5) eines Ofens eine Charge (7) aus mindestens zwei übereinanderliegenden Schichten, die Eisenoxide, ein festes, kohlenstoffhaltiges Reduktionsmittel und ein Entschwefelungsmittel enthalten, aufbringt und mit Hilfe von Wärmegeneratoren erhitzt und die Eisenoxide zumindest mittels Kohlenmonoxid (CO) reduziert, dadurch gekennzeichnet, daß die Charge (7) aus feinteiligem Material besteht, mindestens eine der Schichten im wesentlichen aus Eisenoxiden (1) besteht, mindestens eine andere der Schichten aus einer Mischung (M) aus dem festen, kohlenstoffhaltigen Reduktionsmittel (2) und dem Entschwefelungsmittel (3) gebildet wird, die zuletzt aufgebrachte obere Schicht aus einer Mischung (M) aus dem festen, kohlenstoffhaltigen Reduktionsmittel (2) und dem Entschwefelungsmittel (3) gebildet wird, man gegebenenfalls zwischen den übereinanderliegenden Schichten eine dünne Feinkohleschicht aufbringt, man die obere Schicht direkter, von den Wärmegeneratoren abgestrahlter Wärme aussetzt, wodurch das feste, kohlenstoffhaltige Reduktionsmittel zumindest teilweise zu gasförmigen Kohlenstoff- und Schwefelverbindungen verdampft, mindestens ein Teil des zur Reduktion der Eisenoxide verwendeten Kohlenmonoxids (CO) in den gasförmigen Kohlenstoffverbindungen enthalten ist, welche im wesentlichen zwischen der oberen Schicht und der oder den aus Eisenoxid gebildeten Schichten diffundieren, man mit Hilfe des Entschwefelungsmittels zumindest einen Teil des Schwefels der gasförmigen Schwefelverbindungen fixiert und man die reduzierten Eisenoxide von dem die Rückstände des festen, kohlenstoffhaltigen Reduktionsmittels und des Entschwefelungsmittels enthaltenden Material trennt.

2.  Verfahren nach Anspruch 1, dadurch gekennzeichnet, daß die Wärmegeneratoren Brenner enthalten, die über der Charge so angeordnet sind, daß ihre Abstrahlung direkt die obere Schicht der Charge trifft.

3.  Verfahren nach Anspruch 1 oder 2, dadurch gekennzeichnet, daß man zumindest eine der die Charge bildenden Schichten verdichtet.

4.  Verfahren nach einem der Ansprüche 1 bis 3, dadurch gekennzeichnet, daß man die Charge auf eine Temperatur von mindestens 900°C erhitzt, wodurch die Vergasung des kohlenstoffhaltigen Reduktionsmittels gewährleistet wird.

5.  Verfahren nach einem der Ansprüche 1 bis 4, dadurch gekennzeichnet, daß man das feste, kohlenstoffhaltige Reduktionsmittel in einer Menge zwischen 250 und 500 kg Kohlenstoff pro Tonne produziertem Eisenschwamm in die Mischung (M) einarbeitet.

6.  Verfahren nach einem der Ansprüche 1 bis 5, dadurch gekennzeichnet, daß man das Entschwefelungsmittel unter Calciumverbindungen, wie Kalk (CaO) und Kalkstein ($CaCO_3$), auswählt.

7.  Verfahren nach einem der Ansprüche 1 bis 6, dadurch gekennzeichnet, daß man den heißen Eisenschwamm einem einen gasförmigen Kohlenwasserstoff enthaltenden Gas aussetzt, den gasförmigen Kohlenwasserstoff im Kontakt mit dem heißen Eisenschwamm thermisch crackt, mindestens einen Teil der dabei anfallenden Kohlenstoffteilchen auf der Oberfläche des heißen Eisenschwamms abscheidet und den Eisenschwamm auf eine Temperatur zwischen 600°C und 800°C abkühlt.

8.  Verfahren nach Anspruch 7, bei dem man als gasförmigen Kohlenwasserstoff Methan einsetzt.

Fig.1

Fig.2